# DEMANDE DE BREVET EUROPEEN

(11) **EP 0 812 716 A1**
(43) Date de publication de la demande: **17.12.1997**
(21) Numéro de dépôt: 97109663.1
(22) Date de dépôt: 13.06.1997
(51) Int. Cl.: B60H 1/00

(54) **Installation de chauffage, ventilation et/ou climatisation, à régulation de débit d'air, notamment pour véhicule automobile**

(30) Priorité: 14.06.1996 FR 9607453
(71) Demandeur: VALEO CLIMATISATION, 78321 La Verrière (FR)
(72) Inventeur: Auvity, Michel, 78140 Velizy (FR)
(74) Mandataire: Gamonal, Didier

(57) **Abrégé**

L'installation comprend des moyens de gestion (17), un module de saisie de paramètres aérothermiques (18), ainsi qu'un conduit principal (1) pour alimenter en air frais un conduit de réchauffage (2) logeant, dans une partie amont (5), un radiateur (6), et communicant, par une partie aval (7), avec des sorties d'air (10,16) dites "de dégivrage" (16) et "d'aération-pieds" (10) à accès contrôlés par de premier (24) et second (11) volets de distribution. Le module de saisie (18) comprend un sélecteur (22) destiné à être placé par un utilisateur dans l'une d'une pluralité de positions définissant des proportions différentes entre les flux d'air délivrés respectivement au niveau des sorties de dégivrage (16) et d'aération-pieds (10). Les moyens de gestion (17) sont agencés pour placer conjointement les premier (24) et second (11) volets de distribution dans des positions respectives complémentaires prédéterminées en fonction de la position du moyen de sélection (22).

## Description

L'invention concerne une installation de chauffage, ventilation et/ou climatisation, à débit d'air régulé, destinée notamment à gérer l'aérothermie d'un habitacle de véhicule automobile.

Elle concerne plus particulièrement les installations du type comprenant des moyens de gestion propres à la piloter en fonction de paramètres aérothermiques concernant l'habitacle, saisis par un utilisateur à l'aide d'un module de saisie, ainsi qu'un conduit principal propre à alimenter en air frais un conduit de réchauffage subdivisé en une partie amont, logeant un radiateur destiné à réchauffer cet air frais, et une partie aval communiquant avec des sorties d'air de l'habitacle dites "de dégivrage" et "d'aération-pieds" propres à délivrer des flux d'air de dégivrage et pieds d'intensités respectives, contrôlées par des premier et second volets de distribution commandés en position par les moyens de gestion.

Dans certaines installations de ce type, l'organe de saisie destiné à gérer la distribution d'air au niveau de l'ensemble des sorties d'air de l'habitacle (sorties de dégivrage, d'aération-pieds et "d'aération médiane") offre des modes de distribution imposés permettant, d'une première part, que la totalité de l'air soit distribuée au niveau des sorties de dégivrage, d'une seconde part, que la totalité de l'air soit délivrée au niveau des sorties pieds, et d'une troisième part, que l'air soit réparti de façon équitable (50%-50%) entre les sorties de dégivrage et les sorties d'aération-pieds.

Il en résulte que l'utilisateur ne peut pas contrôler finement la répartition d'air entre les sorties de dégivrage et les sorties d'aération-pieds.

Cela nuit au confort de l'utilisateur, et notamment du conducteur.

Un but de l'invention est donc de procurer une installation de chauffage, ventilation et/ou climatisation qui ne présente pas l'inconvénient des installations de la technique antérieure.

L'invention propose à cet effet une installation du type décrit en introduction dans laquelle, d'une part, le module de saisie comprend un moyen de sélection destiné à être placé par l'utilisateur dans une position parmi une pluralité de positions définissant des proportions différentes entre les flux d'air délivrés respectivement au niveau des sorties de dégivrage et d'aération-pieds, et d'autre part, les moyens de gestion sont agencés pour placer conjointement les premier et second volets de distribution dans des positions respectives complémentaires prédéterminées en fonction de la position dans laquelle se trouve placé le moyen de sélection.

De la sorte, l'utilisateur peut aisément choisir, à l'aide d'un unique moyen de sélection, la répartition d'air traité entre les sorties de dégivrage et les sorties d'aération-pieds, ou en d'autres termes entre les parties haute et basse de l'habitacle du véhicule.

Dans un premier mode de réalisation de l'invention, les moyens de gestion comprennent une mémoire dans laquelle se trouve stockée une table de correspondance entre une pluralité de couples, comprenant respectivement des combinaisons complémentaires différentes des positions respectives des premier et second volets de distribution, et la pluralité de positions du moyen de sélection.

Ainsi, dès que l'utilisateur place le moyen de sélection dans l'une de ses positions possibles, les moyens de gestion sont aptes à effectuer une comparaison entre la position sélectionnée et la pluralité de positions mémorisées du moyen de sélection, laquelle pluralité contient forcément une position mémorisée identique à celle sélectionnée par l'utilisateur. A cette position mémorisée correspond un couple de réglages des premier et second volets de distribution que les moyens de gestion vont utiliser de sorte que le choix de l'utilisateur soit satisfait.

Dans un second mode de réalisation de l'invention, les moyens de gestion comprennent un opérateur propre à calculer les positions complémentaires respectives des premier et second volets de distribution en fonction de la position du moyen de sélection.

Lorsque les moyens de gestion de l'installation sont en outre aptes à réguler la température de l'habitacle par action sur un ou des éléments contrôlant la température du flux d'air alimentant les sorties d'aération-pieds, ainsi que le régime d'un pulseur que comprend ladite installation et destiné à alimenter en air frais le conduit principal, en fonction de la température saisie, on peut prévoir de troisième et quatrième modes de réalisation de l'invention.

Dans le troisième mode de réalisation de l'invention, les moyens de gestion comprennent une mémoire dans laquelle se trouve stockée une table de correspondance entre une multiplicité de multiplets, comprenant respectivement des combinaisons différentes de régime du pulseur, de réglage dudit ou desdits éléments, et de positions respectives des premier et second volets de distribution et une multiplicité de couples de combinaisons différentes de position du moyen de sélection et de température saisie.

Dans le quatrième mode de réalisation de l'invention, les moyens de gestion comprennent un opérateur propre à calculer le régime du pulseur, le réglage dudit ou desdits éléments, et les positions respectives des premier et second volets de distribution en fonction de la position du moyen de sélection et de la température saisie.

Dans ces troisième et quatrième modes de réalisation, il est possible d'adapter la régulation de la température de l'habitacle en fonction de la répartition des flux d'air sélectionnés par l'utilisateur, de sorte qu'en cas de changement de ladite sélection, la température à l'intérieur de l'habitacle ne soit pas modifiée. Cela contribue à renforcer encore le confort de l'utilisateur.

Dans une première forme de réalisation du moyen de sélection, celui-ci est un variateur à affichage comprenant de première et seconde parties désignant respectivement les sorties de dégivrage et d'aération-pieds, et propres à faire croître, pendant toute la durée d'actionnement, l'intensité du flux d'air au niveau de la sortie d'air qu'elles désignent respectivement, tout en matérialisant sur l'affichage la proportion entre les flux d'air délivrés respectivement au niveau des sorties de dégivrage et d'aération-pieds en correspondance des intensités des flux d'air ainsi choisis, ladite croissance ne pouvant s'effectuer qu'entre une première position dans laquelle le premier volet est grand ouvert et le second volet complètement fermé (répartition de type 100% - 0%), et une seconde position dans laquelle le second volet est grand ouvert et le premier volet complètement fermé (répartition de type 0% - 100%).

Dans une première variante, le variateur comprend une touche à bascule dont une première partie d'extrémité forme la première partie et une seconde partie d'extrémité forme la seconde partie.

Dans une seconde variante, le variateur comprend deux touches indépendantes formant respectivement les première et seconde parties. Ces touches peuvent être du type sensitif ou bouton-pression.

Dans un seconde forme de réalisation du moyen de sélection, celui-ci est un organe à déplacement rotatif, ou linéaire, propre à être déplacé entre les première et seconde positions.

Dans la description qui suit, faite à titre d'exemple, on se réfère aux dessins annexés, sur lesquels :
- la figure 1 illustre schématiquement une installation de chauffage, ventilation et climatisation selon l'invention;
- les figures 2A à 2E illustrent schématiquement, respectivement, cinq positions différentes d'un moyen de sélection d'une installation selon l'invention, dans un mode de réalisation particulier; et
- la figure 3 est un diagramme illustrant la loi de répartition des flux d'air entre les sorties de dégivrage et les sorties d'aération-pieds.

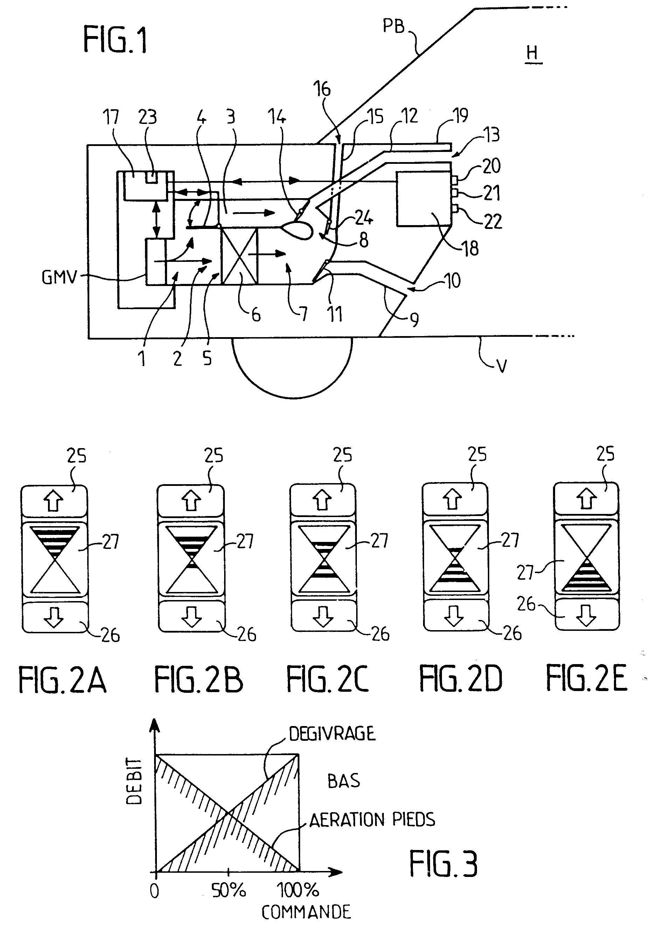

La figure 1 illustre un véhicule V qui loge une installation, par exemple de chauffage, ventilation et climatisation de l'habitacle H. Cette installation comprend notamment un groupe motoventilateur GMV alimenté en air extérieur et/ou intérieur (à l'habitacle) et destiné à alimenter en air frais, grâce à un pulseur qu'il comprend, un conduit principal d'alimentation 1.

Dans l'exemple illustré, mais non limitatif, le conduit principal d'alimentation 1 se subdivise en un conduit de réchauffage d'air 2 et un conduit d'air frais 3. La répartition de l'air frais issu du conduit principal d'alimentation 1, entre le conduit de réchauffage 2 et le conduit d'air frais 3, est réalisée à l'aide d'un volet de réglage 4.

Le conduit de réchauffage 2 est divisé en deux parties, une partie amont 5 dans laquelle se trouve implanté un radiateur 6 destiné à réchauffer l'air frais qui traverse ledit conduit de réchauffage, et une partie aval 7 dans laquelle débouche l'air réchauffé après traversée du radiateur 6.

Les extrémités "aval" (en référence au sens de circulation de l'air) respectives des conduits de réchauffage 2 et d'air frais 3 débouchent dans une zone de mélange d'air 8 qui est réalisée sous la forme d'un conduit auxiliaire. L'extrémité aval du conduit de réchauffage 2 communique également avec un conduit secondaire d'aération-pieds 9 destiné à alimenter en air traité, par l'installation, des sorties d'aération-pieds 10 qui sont situées dans les parties basses de l'habitacle H du véhicule. Ce conduit secondaire d'aération-pieds 9 est à accès contrôlé par un volet de distribution 11. Il est ainsi possible de gérer la répartition de l'air chaud, issu de la partie aval 7, entre les sorties d'aération-pieds 10 et le conduit auxiliaire de mélange 8.

De même, l'extrémité aval du conduit d'air frais 3 communique avec un conduit secondaire d'aération médiane 12 destiné à alimenter en air traité les sorties d'aération médiane 13 logées dans les parties médianes de l'habitacle H du véhicule, généralement dans la planche de bord 19. Cette extrémité aval du conduit d'air frais 3 loge également un volet de mélange 14 qui contrôle l'accès du conduit secondaire d'aération médiane 12 et du conduit auxiliaire de mélange 8. De la sorte, il est possible d'acheminer une partie au moins de l'air frais issu du conduit d'air frais 3 dans la partie aval 7 du conduit de réchauffage 6 afin d'obtenir une température d'air traité mitigée.

Le conduit auxiliaire de mélange 8 communique également avec un conduit secondaire de dégivrage 15 destiné à alimenter en air traité des sorties de dégivrage 16 situées à proximité de la partie inférieure du pare-brise PB du véhicule V.

L'installation comprend également un module de gestion 17 agencé pour transformer en commande de réglage des différents éléments réglables de l'installation, sur lesquels on reviendra plus loin, des ordres issus d'un module de saisie 18 logé dans la planche de bord 19 du véhicule V.

Le module de saisie 18 sert d'interface entre l'utilisateur et les moyens de gestion 17, dans la mesure où il comprend des organes de saisie 20-22 permettant à l'utilisateur de saisir des paramètres aérothermiques concernant l'habitacle H, comme par exemple la température à l'intérieur de cet habitacle ou dans une zone choisie de celui-ci, le débit de l'air traité, le mode de fonctionnement de l'installation (chauffage simple, climatisation, etc).

Après saisie d'un ou plusieurs paramètres aérothermiques, le module de saisie 18 adresse au module de gestion 17 un ordre lui intimant de faire correspondre à ces paramètres aérothermiques saisis des réglages prédéterminés de certains au moins des éléments réglables de l'installation.

Dans les installations connues, la correspondance entre les paramètres aérothermiques saisis et les réglages de l'installation est généralement effectuée par le module de gestion 17 qui comprend à cet effet une mémoire 23 agencée sous forme d'une table de correspondance. Cette table stocke une multiplicité de multiplets comprenant respectivement des combinaisons différentes des réglages de certains au moins des éléments réglables de l'installation, et une multiplicité de multiplets de paramètres aérothermiques concernant l'habitacle.

A chaque multiplet de paramètres aérothermiques correspond un multiplet de réglages de l'installation.

Selon l'invention, le module de saisie 18 comporte un organe de sélection 22 qui peut être placé dans une multiplicité de positions différentes, chaque position offrant une répartition différente du flux d'air traité par l'installation entre les sorties d'aération-pieds 10 et de dégivrage 16.

Cette répartition peut varier selon les options choisies par le constructeur soit continûment, soit discrètement.

Dans un mode de réalisation de base de l'invention, la mémoire 23 comprend une autre table de correspondance entre une pluralité de couples comprenant des combinaisons différentes des positions des volets de distribution d'aération-pieds 11 et de dégivrage 24, et une pluralité de singletons comprenant chacun une position possible de l'organe de sélection 22.

Ce mode de réalisation est préférable lorsque les positions que peut prendre l'organe de sélection 22 sont discrètes. En revanche, lorsque les positions varient continûment, il est préférable de prévoir un second mode de réalisation (non illustré sur les figures), dans lequel le module de gestion 17 comprend un module opérateur propre à calculer les positions complémentaires respectives des volets de distribution 11 et 24 en fonction de la position de l'organe de sélection.

Dans ces deux modes de base, à chaque position de l'organe de sélection 22 correspond un couple de réglages du volet de distribution d'aération-pieds 11 et du volet de distribution de dégivrage 24.

Dès que l'utilisateur place l'organe de sélection 22 dans l'une de ses positions possibles, le module de saisie 18 adresse cette position choisie au module de gestion 17, lequel recherche dans la table de correspondance stockée dans la mémoire 23 le singleton qui est identique à la position choisie par l'utilisateur. A cette position correspond un couple de réglages des volets de distribution 11 et 24. Il ne reste plus alors au module de gestion 17 qu'à piloter le positionnement desdits volets de distribution 11 et 24 dans les positions contenues dans le couple qui correspond à la position choisie par l'utilisateur.

Bien entendu, la température de l'air traité réparti entre les sorties d'aération-pieds 10 et de dégivrage 16 dépend des positions respectives du volet de réglage d'air frais 4 et de mélange 14. Néanmoins, dans les modes de réalisation de base, la sélection d'une position au niveau de l'organe de sélection 22 est indépendante des réglages des autres éléments de l'installation, et notamment du volet de réglage 4, du volet de mélange 14, du régime du pulseur du groupe motoventilateur GMV, et du radiateur de chauffage 6.

En revanche, dans un mode de réalisation, plus sophistiqué (non illustré sur les figures), de l'installation selon l'invention, la mémoire 23 stocke, par exemple, des couples de paramètres aérothermiques, au lieu des singletons. Chaque couple de réglages aérothermiques comprend alors une température possible à l'intérieur de l'habitacle et une répartition possible de débit d'air entre les sorties d'aération-pieds 10 et les sorties de dégivrage 16.

A chacun de ces couples de paramètres aérothermiques correspond un multiplet de réglages de certains au moins des éléments réglables de l'installation, parmi lesquels le volet de réglage 4, le volet de mélange 14, les volets de distribution 11 et 24, le régime du pulseur du groupe motoventilateur GMV. Ces multiplets peuvent comprendre également d'autres réglages, comme par exemple la température interne du fluide circulant dans le radiateur de chauffage 6 lorsque celui-ci est à température variable.

En variante, on peut prévoir un quatrième mode de réalisation (non illustré sur les figures) dans lequel les moyens de gestion comprennent un opérateur propre à calculer le régime du pulseur, le réglage dudit ou desdits éléments, et les positions respectives des premier et second volets de distribution en fonction de la position du moyen de sélection et de la température saisie. Ce mode ne fait pas appel nécessairement à une mémoire. Il convient préférentiellement aux installations dans lesquelles les réglages peuvent varier continûment, alors que le mode précédent convient mieux aux installations dans lesquelles les réglages varient discrètement.

Dans les deux derniers modes de réalisation, lorsque l'utilisateur a choisi de faire fonctionner l'installation dans un mode de régulation de température, il est donc possible d'adapter la régulation de température en fonction de la répartition particulière des débits d'air entre les sorties d'aération-pieds 10 et de dégivrage 16, choisie par ledit utilisateur.

Il est clair que dans ces deux derniers modes de réalisation, la position des volets de distribution 11 et 24 pour une position sélectionnée particulière, ne correspondra pas forcément à la même combinaison de réglages des volets de distribution 11 et 24 qui serait nécessaire dans les deux premiers modes de réalisation de base décrits précédemment.

On se réfère maintenant aux figures 2 et 3.

L'organe de sélection 22 illustré sur les figures 2A à 2E, à titre d'exemple, peut être réalisé, notamment, sous la forme d'un variateur à affichage comprenant de première 25 et seconde 26 touches, et une zone d'affichage 27.

La première touche 25 comprend, par exemple, une flèche verticale orientée vers le haut afin d'indiquer qu'elle est destinée à gérer l'intensité du débit d'air au niveau des sorties de dégivrage 16. La seconde touche 26 comprend, par exemple, une flèche verticale orientée vers le bas, afin d'indiquer qu'elle est destinée à gérer l'intensité du débit d'air au niveau des sorties d'aération-pieds 10.

Ces première 25 et seconde 26 touches peuvent être du type sensitif ou à bouton-poussoir.

Lorsque l'utilisateur actionne l'une des touches 25 et 26, par exemple avec un doigt, il fait croître l'intensité du débit d'air au niveau de la sortie correspondante. Ainsi, s'il actionne la touche 25, il fera croître l'intensité du débit d'air au niveau des sorties de dégivrage 16 et au détriment des sorties d'aération-pieds 10, et inversement s'il actionne la seconde touche 26, il fera croître l'intensité du débit d'air au niveau des sorties d'aération-pieds 10 et au détriment des sorties de dégivrage 16.

Bien entendu, l'intensité I ne peut croître qu'entre les valeurs I=0 et Imax, l'intensité I=0 (voir figure 3) correspondant, par exemple, à un débit nul au niveau des sorties de dégivrage 16 et à un débit maximal (100%) au niveau des sorties d'aération-pieds 10, et l'intensité I=Imax correspondant à un débit maximal (100%) au niveau des sorties de dégivrage 16 et à un débit nul (0%) au niveau des sorties d'aération-pieds 10.

En d'autres termes, une intensité nulle (I=0) au niveau des sorties de dégivrage 16 correspond à la fermeture complète du volet de distribution 24, et à l'ouverture complète du volet de distribution 11 (alimentation des sorties d'aération-pieds 10), tandis qu'une intensité maximale au niveau des sorties de dégivrage 16 correspond à la situation inverse, à savoir le volet de distribution 24 en position grand ouvert et le volet de distribution 11 complètement fermé (alimentation des sorties de dégivrage 16).

On a représenté sur les figures 2A à 2E cinq positions différentes de l'organe de sélection 22. La figure 2A illustre le cas où l'intensité est maximale au niveau des sorties de dégivrage 16, et nulle au niveau des sorties d'aération-pieds 10, ce qui correspond à une répartition de type 100%-0%. La figure 2B illustre une position dans laquelle 75% de l'air est distribué au niveau des sorties de dégivrage 16 et 25% au niveau des sorties d'aération-pieds 10. La figure 2C illustre une position dans laquelle l'air est réparti de façon équitable à 50%-50% entre les sorties de dégivrage 16 et les sorties d'aération-pieds 10. La figure 2D illustre une position dans laquelle 25% de l'air est distribué au niveau des sorties de dégivrage 16, et 75% au niveau des sorties d'aération-pieds 10. La figure 2E illustre une position dans laquelle 100% de l'air est distribué au niveau des sorties d'aération-pieds 10.

Bien entendu, cette répartition concerne exclusivement l'air traité destiné à alimenter les sorties de dégivrage 16 et d'aération-pieds 10. Mais elle n'interdît pas que de l'air traité soit distribué dans le même temps, au niveau des sorties d'aération médiane 13.

L'affichage de la répartition des débits d'air entre les sorties de dégivrage 16 et d'aération-pieds 10 est réalisé au niveau d'une zone d'affichage 27, qui est placée, dans l'exemple illustré, entre les deux touches 25 et 26. De nombreuses variantes d'affichage connues de l'homme de l'art peuvent être envisagées. Dans l'exemple, le variateur est du type à variation discrète. L'affichage se fait par mise en service d'une ou plusieurs diodes électroluminescentes de part et d'autre d'un repère séparant les deux débits d'air. Le nombre de diodes en service (allumées) d'un côté est toujours égal au nombre de diodes hors service (non allumées) de l'autre côté.

L'organe de sélection 22 peut être réalisé de nombreuses autres façons différentes.

Ainsi, lorsqu'il est réalisé sous forme d'un variateur à affichage, celui-ci peut être sous forme d'une unique touche à bascule dont une première partie d'extrémité 25 désigne par exemple les sorties de dégivrage 16, une seconde partie d'extrémité 26, opposée à la première, désigne les sorties d'aération-pieds 10, et une partie centrale 27 sert de zone d'affichage de la répartition des débits d'air. Dans ce mode de réalisation, la zone d'affichage peut être située à proximité du variateur à bascule.

Dans une autre forme de réalisation, l'organe de sélection 22 peut être un organe à déplacement rotatif ou à déplacement linéaire.

Lorsque l'utilisateur actionne pour la première fois l'organe de sélection 22, la répartition des débits d'air traité peut être soit dans un mode fixé à 50% - 50%, soit, lorsque l'installation comprend des moyens de mémorisation des paramètres saisis, dans la dernière position occupée par ledit organe de sélection. Cette dernière solution ne peut être mise en oeuvre facilement que dans le cas d'un variateur à touche(s).

Bien entendu, l'invention ne se limite pas au mode de réalisation de l'installation décrite précédemment à titre d'exemple, mais elle s'étend à toutes les variantes que pourra développer l'homme de l'art dans le cadre des revendications ci-après.

## Revendications

1. Installation de chauffage, ventilation et/ou climatisation, notamment d'un habitacle (H) de véhicule automobile (V), du type comprenant des moyens de gestion (17) propres à piloter l'installation en fonction de paramètres aérothermiques concernant l'habitacle, saisis par un utilisateur au moyen d'un module de saisie (18), ainsi qu'un conduit principal (1) propre à alimenter en air frais un conduit de réchauffage (2) subdivisé en une partie amont (5), logeant un radiateur (6) destiné à réchauffer cet air frais, et une partie aval (7) communicant avec des sorties d'air (10,16) de l'habitacle dites "de dégivrage" (16) et "d'aération-pieds" (10) propres à délivrer des flux d'air de dégivrage et pieds d'intensités respectives contrôlées par des premier (24) et second (11) volets de distribution commandés en position par lesdits moyens de gestion (17),
caractérisée en ce que le module de saisie (18) comprend un moyen de sélection (22) destiné à être placé par l'utilisateur dans une position parmi une pluralité de positions définissant des proportions différentes entre les flux d'air délivrés respectivement au niveau des sorties de dégivrage (16) et d'aération-pieds (10),
et en ce que les moyens de gestion (17) sont agencés pour placer conjointement les premier (24) et second (11) volets de distribution dans des positions respectives complémentaires prédéterminées en fonction de la position dans laquelle se trouve placé le moyen de sélection (22).

2. Installation selon la revendication 1, caractérisée en ce que les moyens de gestion (17) comprennent une mémoire (23) dans laquelle se trouve stockée une table de correspondance entre une pluralité de couples, comprenant respectivement des combinaisons complémentaires différentes des positions respectives des premier (24) et second (11) volets de distribution, et la pluralité de positions du moyen de sélection (22).

3. Installation selon la revendication 1, caractérisée en ce que les moyens de gestion (17) comprennent un opérateur propre à calculer les positions complémentaires respectives des premier (24) et second (11) volets de distribution en fonction de la position du moyen de sélection (22).

4. Installation selon la revendication 1, dans lequel les moyens de gestion (17) sont en outre aptes à réguler la température de l'habitacle par action sur un ou des éléments (6,4,14) contrôlant la température du flux d'air alimentant les sorties d'aération-pieds (10), ainsi que le régime d'un pulseur (GMV) que comprend ladite installation et destiné à alimenter en air frais le conduit principal (1), en fonction de la température saisie, caractérisée en ce que lesdits moyens de gestion (17) comprennent une mémoire (23) dans laquelle se trouve stockée une table de correspondance entre une multiplicité de multiplets, comprenant respectivement des combinaisons différentes de régime du pulseur (GMV), de réglage dudit ou desdits éléments (6,4,14), et de positions respectives des premier (24) et second (11) volets de distribution et une multiplicité de couples de combinaisons différentes de position du moyen de sélection (22) et de température saisie.

5. Installation selon la revendication 1, dans lequel les moyens de gestion (17) sont en outre aptes à réguler la température de l'habitacle par action sur un ou des éléments (6,4,14) contrôlant la température du flux d'air alimentant les sorties d'aération-pieds (10), ainsi que le régime d'un pulseur (GMV) que comprend ladite installation et destiné à alimenter en air frais le conduit principal (1), en fonction de la température saisie, caractérisée en ce que lesdits moyens de gestion (17) comprennent un opérateur propre à calculer le régime du pulseur (GMV), le réglage dudit ou desdits éléments (6,4,14), et les positions respectives des premier (24) et second (11) volets de distribution en fonction de la position du moyen de sélection (22) et de la température saisie.

6. Installation selon l'une des revendications 1 à 5, caractérisée en ce que la pluralité de positions du moyen de sélection (22) comprend au moins trois positions, dont une première position dans laquelle le premier volet (24) est grand ouvert et le second volet (11) est complètement fermé, une seconde position dans laquelle le second volet (11) est grand ouvert et le premier volet (24) est complètement fermé, et une troisième position dans laquelle les premier (24) et second (11) volets sont à moitié ouvert.

7. Installation selon la revendication 6, caractérisée en ce que le moyen de sélection (22) est un variateur à affichage comprenant de première (25) et seconde (26) parties désignant respectivement les sorties de dégivrage (16) et d'aération-pieds (10), et propres à faire croître, pendant toute la durée d'actionnement, l'intensité du flux d'air au niveau de la sortie d'air qu'elles désignent respectivement, tout en matérialisant sur l'affichage (27) la proportion entre les flux d'air délivrés respectivement au niveau des sorties de dégivrage (16) et d'aération-pieds (10) en correspondance des intensités des flux d'air ainsi choisies, ladite croissance ne pouvant s'effectuer qu'entre les première et seconde positions.

8. Installation selon la revendication 7, caractérisée en ce que le variateur (22) comprend une touche à bascule dont une première partie d'extrémité (25) forme la première partie et une seconde partie d'extrémité (26) forme la seconde partie, un contact inférieur pour définir.

9. Installation selon la revendication 7, caractérisée en ce que le variateur (22) comprend deux touches (25,26) formant respectivement les première et seconde parties.

10. Installation selon la revendication 9, caractérisée en ce que les touches (25,26) sont du type sensitive ou bouton-pression.

11. Installation selon la revendication 6, caractérisée en ce que le moyen de sélection (22) est un organe à déplacement rotatif, ou linéaire, propre à être déplacé entre de première et seconde positions d'extrémité formant respectivement les premières et secondes positions.
